# EUROPÄISCHE PATENTSCHRIFT

(11) **EP 4 196 247 B1**
(45) Veröffentlichungstag und Bekanntmachung des Hinweises auf die Patenterteilung: **18.03.2026**
(21) Anmeldenummer: 21730812.1
(22) Anmeldetag: 27.05.2021
(51) Int. Cl.: B01D 61/22, B01D 65/02

(54) **VERFAHREN ZUM REINIGEN VON MODULEN EINER FILTEREINRICHTUNGEN UND MODUL ZUR FILTRATION**
METHOD OF CLEANING MODULS OF A FILTRATION UNIT AND FILTRATION MODULE
METHODE DE NETOYAGE DES MODULES D'UN DISPOSITIF DE FILTRATION ET MODULE DE FILATRATION

(30) Priorität: 12.08.2020 DE 102020121256
(43) Veröffentlichungstag der Anmeldung: 21.06.2023
(73) Patentinhaber: Fresenius Medical Care Deutschland GmbH, 61352 Bad Homburg (DE)
(72) Erfinder: HEINZ, Thomas, 66606 St. Wendel (DE); WEHMEYER, Wolfgang, 84030 Ergolding (DE)
(74) Vertreter: Stolmár & Partner Patentanwälte PartG mbB
(86) Internationale Anmeldenummer: PCT/EP2021/064276
(87) Internationale Veröffentlichungsnummer: WO 2022/033738

(56) Entgegenhaltungen:
- WO-A1-2015/124600
- CN-A- 111 087 045
- DE-A1- 10 164 555
- DE-A1- 102017 208 730
- US-A1- 2009 173 690
- US-A1- 2013 333 178

## Beschreibung

### Gebiet der Erfindung

Die Erfindung betrifft ein Verfahren zum Reinigen von Filtereinrichtungen eines Moduls zur Filtration von Fluiden und ein Modul zu dessen Durchführung.

### Stand der Technik

Es sind verschiedene Filtersysteme bekannt, die beispielsweise für industrielle Zwecke Fluide filtern und das gefilterte Fluid wieder ableiten. Da für industrielle Zwecke hinsichtlich größtmöglicher Maschinennutzeffekte ein kontinuierlicher Filterbetrieb angestrebt wird, ist es vorteilhaft, Filterreinigungszeiten zu minimieren. Um einen kontinuierlichen Filterbetrieb trotz gelegentlichen Ausfalls eines Filters aufrechtzuerhalten, können mehrere Filtermodule parallel eingesetzt werden, die Filtrat in eine zentrale Sammelleitung speisen. Dadurch kann gleichzeitig die Filtratmenge erhöht werden. Ein solches Filtersystem ist beispielsweise in WO 2013/048801 A1 offenbart. Dieses umfasst eine Filtermodulanordnung, die einen Behälter mit einer darin angeordneten Filterpatrone und einen mit einem Ende des Behälters gekoppelten Sammler umfasst, wobei der Kopf ein Gehäuse mit einem offenen oberen Ende und einem unteren Ende sowie eine Endkappe enthält. Ein Abschnitt, der auf eine komplementäre Struktur passt, die durch das Innere des gesamten offenen oberen Endes des Gehäuses definiert ist, so dass er entfernbar mit dem Gehäuse und der Endkappe in Eingriff kommt, definiert einen Durchgang, durch den Flüssigkeit aus dem Behälter herausfließen kann. Die Filtermodulanordnung ermöglicht eine Verteileranordnung, die verwendet wird, um Flüssigkeiten zu und von einem Filtersystem zu fördern, das mehrere solcher Module umfasst. Nachteile bestehender Lösungen zur Filterreinigung sind jedoch, dass diese auf dem Prinzip des Rückspülens basieren, also dem aufwendigen Umkehren der Strömungsrichtung und der Verwendung von Filtrat zum Spülen der Filter entgegen der Hauptfilterrichtung. Durch die prinzipbedingt langen Wege resultieren ein großer Druckverlust im Leitungssystem und eine schlechte Fluidverteilung, wodurch die Prozesseffektivität verringert und damit Prozesszeiten erhöht werden. Das in Kombination mit der Verwendung von Filtrat, also dem Produkt des Filterprozesses führt letztlich dazu, dass Maschinennutzeffekte reduziert werden. Es existieren Bestrebungen, Filtersysteme zu verwenden, mit denen innerhalb eines einzelnen Strömungsraumes rückgespült werden kann. Dabei wird der Rückspülweg reduziert und ein kompaktes Modul mit einem filtraterzeugenden Modulbereich sowie einem rückgespülten Modulbereich bereitgestellt. Die dabei verwendeten flächigen Membranfilter führen allerdings zu einer schlechten Strömungsverteilung, da das Fluid nur über einen geringen Flächenanteil des Filters ein- beziehungsweise ausströmt. Damit wird ein großer Teil des Filters nicht ausreichend gereinigt. Ferner ist auch der Strömungsweg des Filtrats, das über die das Filtrat normalerweise abführende Filtratsammelleitung in das Modul eingespeist wird, sehr lang, was zu großen Strömungsverlusten führt.

Die DE 101 64 555 A1 offenbart ein Verfahren zum Betreiben einer Cross-Flow-Mikrofiltrationsvorrichtung, mit dem es möglich ist, während der Reinigungsphase einen kontinuierlichen Filtrationsbetrieb aufrecht zu erhalten. Das Verfahren sieht vor, dass mindestens zeitweise mindestens ein Filtermodul von der Unfiltratzuführung und/oder Unfiltratabführung abgetrennt wird und im Rückspülmodus betrieben Wird, während gleichzeitig der oder die übrigen Filtermodule im Filtrationsmodus betrieben werden, wobei ein Teil des von diesen Filtermodulen erzeugten Filtrats für die Rückspülung abgezweigt wird.

Die DE 10 2017 208 730 A1 offenbart eine Filtervorrichtung und ein Verfahren mit mindestens einem Modulpaket, das mehrere, insbesondere mindestens drei Module zur Crossflow-Filtration umfasst, die einen ersten Unfiltratanschluss an einem ersten Ende des Moduls aufweisen und einen zweiten Unfiltratanschluss an der gegenüberliegenden Seite des Moduls sowie mindestens einen Filtratablauf. Die Vorrichtung umfasst eine Ventilanordnung, die derart ausgebildet ist, dass die einzelnen Module jeweils wahlweise entweder von dem ersten oder dem zweiten Unfiltratanschluss mit Unfiltrat durchströmbar sind.

Die CN 111087045 A offenbart ein Filtermodul, bei dem bei der Endkopfkomponente sowohl ein Wassereinlassrohr als auch ein Lufteinlassrohr mit der Wasseraustrittsöffnung verbunden sind. Das Lufteinlassrohr ist auf einer Seite der Wasserauslassöffnung angeordnet und weist eine innere obere Fläche benachbart zur Wasserauslassöffnung und eine innere untere Fläche entfernt von der Wasserauslassöffnung auf. Ein Luftauslasszweigrohr ist innerhalb des Lufteinlassrohrs vorgesehen ist, das sich von der inneren Bodenfläche des Lufteinlassrohrs in Richtung der Wasserauslassöffnung erstreckt und das Luftauslasszweigrohr mit der Wasserauslassöffnung verbindet.

### Darstellung der Erfindung

Aufgabe der Erfindung ist es, ein Verfahren zum Reinigen von Filtereinrichtungen eines Moduls zur Filtration von Fluiden und ein Modul zu dessen Durchführung bereitzustellen, mit dem die Filtereinrichtungen effizient und kostengünstig gereinigt werden können. Das zu filternde Fluid ist dabei bevorzugt eine Flüssigkeit, insbesondere Wasser, wobei für das Reinigungsverfahren auch Gas, beispielsweise Stickstoff, verwendet werden kann.

Diese Aufgabe wird gelöst durch ein Verfahren nach Anspruch **Error! Reference source not found.** und durch ein Modul nach Anspruch **Error! Reference source not found..** Weitere die Erfindung ausgestaltende Merkmale sind in den abhängigen Ansprüchen enthalten.

Bei einem erfindungsgemäßen Verfahren zum Reinigen einer Filtereinrichtung eines Moduls zur Filtration von Fluiden, wobei das Modul eine Zuführleitung mit zumindest zwei getrennten Zuführkanälen, die das Fluid zu der Filtereinrichtung fördern, wobei die die Filtereinrichtung für jeden Zuführkanal einen nur für diesen bestimmten Filtereingangsbereich aufweist, einen Filtratraum und eine Filtratleitung, die einen oder mehrere Filtratkanäle aufweist und die das Filtrat aus dem Filtratraum aufnimmt und abführt, wird die zu einem Modul führende Zuführleitung aufgeteilt, sodass gleichzeitig zumindest ein erster Zuführkanal ein Fluid zur Filtereinrichtung fördert und zumindest ein zweiter Zuführkanal das Fluid von der Filtereinrichtung abführt. So wird sichergestellt, dass beim Abführen des Fluids durch eine Zuführleitung die in den Filtern befindlichen Partikeln durch das Fluid ausgewaschen werden. Insbesondere wenn das zugeführte Fluid durch den dazugehörigen Filter filtriert und in den Filtratraum geleitet wird und es von dort nur durch den zur abführenden Zuführleitung gehörenden Filter wieder heraus gelangt, wird dieser Filter äußerst gründlich gereinigt. Dies funktioniert ebenfalls in entgegengesetzter Richtung. Wenn also das Fluid zum Reinigen der Filtereinrichtung direkt von den Zuführleitungen an die Filtereinrichtung gefördert wird, ist ein aufwendiges Befüllen eines an das Modul angeschlossenen Filtratkanals unnötig. Ferner werden auch der Weg des Fluids und die Anzahl der vom Fluid durchströmten Elemente minimiert. Außerdem kann durch geschickte Eindrosselung auch das gleichzeitige Rückspülen einer Seite und Bereitstellen von Filtrat am Ausgang erreicht werden. Ein Vorteil der Erfindung ist, dass der Platzverbrauch stark reduziert wird, da nur ein Modul benötigt wird, anstatt zwei Module. Demnach reduziert sich ebenfalls der Anschlussaufwand. Weiterhin können spezielle Rückspülverfahren, beispielsweise das Überkreuzrückspülverfahren durchgeführt werden.

Ein weiterer Vorteil der Erfindung ist, dass durch Reduzierung des Rückspülweges eine schlechte Strömungsverteilung während des Rückspülens vermieden werden kann. Das für das Rückspülen benötigte Fluid wird in der direkten Umgebung bereitgestellt, insbesondere gefiltert, in der es genutzt wird. Somit stellt sich eine homogenere Strömungsverteilung innerhalb des Moduls ein, so dass stark unterschiedlich verschmutzte Bereiche der Filtereinrichtung vermieden werden und die Blockade der Filterelementmembranen gleichmäßig reduziert wird.

Vorzugsweise fördert bei dem Verfahren zum Reinigen einer Filtereinrichtung eines Moduls zur Filtration von Fluiden ein erster Zuführkanal Fluid über die Filtereinrichtung zu einem zweiten Zuführkanal. Dabei werden bevorzugt Hohlfasermembranen als Filterelemente verwendet. Die Filtereinrichtung wird durch das Vorbeispülen des Fluids an den Faserinnenwänden gereinigt, ohne dass dabei das Fluid von der Hohlfasermembran gefiltert wird. Dadurch, dass das Fluid nicht durch die Filter hindurch sondern an den Filtermembranen vorbei gefördert wird, ist die Reinigung der Filter zwar nicht so gründlich aber dafür wesentlich schneller. In einer anderen bevorzugten Ausführungsform wird das Fluid vor dem Abführen durch den zumindest zweiten Zuführkanal durch Filtereinrichtung gefiltert und reinigt den Filter bei der Rückspülung. Dadurch wird der Filter gründlich von den Partikeln befreit.

Bei weiteren erfindungsgemäßen Verfahren wird das Fluid vorzugsweise vor dem Abführen im zweiten Zuführkanal durch die Filtereinrichtung gefiltert. Dadurch wird sichergestellt, dass der zu reinigende Teil der Filtereinrichtung mit Filtrat gereinigt wird. Das Reinigen wird so wesentlich effektiver.

Bei weiteren erfindungsgemäßen Verfahren wird das Fluid vorzugsweise vor dem Abführen im zweiten Zuführkanal durch die Filtereinrichtung gefiltert. Dadurch wird sichergestellt, dass der zu reinigende Teil der Filtereinrichtung mit Filtrat gereinigt wird. Das Reinigen wird so wesentlich effektiver.

Verfahren nach einem der vorhergehenden Ansprüche, ferner umfassend den Schritt des Verschließens eines oder mehrerer Zuführkanäle, insbesondere mittels eines Ventils. Durch das Verschließen einzelner oder mehrerer Zuführkanäle lassen sich die zu reinigenden Filter sehr einfach ansteuern.

Es können gleichzeitig die Filter mehrerer in Reihe miteinander verbundener Module mit den ersten und zweiten Zuführkanälen gereinigt werden, was das Verfahren effizienter gestaltet. Es können auch zwei oder mehrere Module parallel miteinander verbunden sein.

Bei weiteren erfindungsgemäßen Verfahren wird das Fluid vorzugsweise vor dem Abführen im zweiten Zuführkanal durch die Filtereinrichtung gefiltert. Dadurch wird sichergestellt, dass der zu reinigende Teil der Filtereinrichtung mit Filtrat gereinigt wird. Das Reinigen wird so wesentlich effektiver.

Die Erfindung betrifft auch ein Modul zur Filtration von Fluiden, umfassend eine Zuführleitung zum Fördern von Fluid, eine ein Filterelement umfassende Filtereinrichtung, die eingerichtet ist, um jeweils das von der Zuführleitung an die Filtereinrichtung geförderte Fluid zu filtern, einen Filtratraum für die Aufnahme des durch das Filterelement gefilterten Fluids und einen Filtratkanal, der das Filtrat aus dem Filtratraum aufnimmt und abführt, wobei die Zuführleitung zumindest zwei voneinander getrennte Zuführkanäle aufweist und die Filtereinrichtung für jeden dieser Zuführkanäle einen nur für diesen bestimmten Filtereingangsbereich aufweist, an dem das Fluid in die das Filterelement der Filtereinrichtung eintritt. Dieses Modul ermöglicht das erfindungsgemäße Verfahren und die damit beschriebenen Vorteile.

Das Filterelement kann eine Hohlfasermembran umfassen. Diese sind für geeignet beide Filterreinigungsarten geeignet, wodurch das Modul flexibler wird.

Die Zuführkanäle sind bevorzugt zumindest teilweise aus zwei getrennten Rohren ausgebildet und/oder als ein Rohr, bei dem die Trennung der Zuführkanäle durch ein Trennelement ausgeformt ist. Ferner kann das Modul ein Kopfelement umfassen, in dem die Zuführkanäle durch voneinander getrennte Kammern ausgebildet sind und die an die Filtereinrichtung angrenzen.

Die Kammern weisen bevorzugt jeweils zwei Anschlussöffnungen auf, so dass das Fluid in die Kammer einfließen und zumindest teilweise auch ausfließen kann. Vorzugsweise sind die Verbindungen zwischen dem zumindest einen Trennelement und den an dieses angrenzenden Bereichen mittels eines Dichtelementes gegenüber dem Fluid abgedichtet.

Zumindest ein Zuführkanal weist bevorzugt eine Vertiefung für das Abführen von Gas auf. Dies ist insbesondere beim Reinigen der Filter oder beim erstmaligen Befüllen mit Fluid von Nutzen. Diese Vertiefung ist auf der oberen Seite des oder der Zuführkanäle ausgebildet (in Bezug auf die Gravitationsrichtung).

Das Modul umfasst insbesondere ferner eine Ventileinrichtung mit einem oder mehreren Ventilen, mit der ein oder mehrere Zuführkanäle und/oder ein oder mehrere Filtratkanäle verschließbar sind. Dadurch lässt sich die Strömungsrichtung des Fluids und so die zu reinigenden Filter auf einfache Weise ansteuern. Das Ventil kann beispielsweise im Kopfbereich vorgesehen sein.

Die Module agieren gleichzeitig als Sammler, um die entsprechenden Strömungen auf die in Reihe miteinander verbundenen Module zu verteilen, wobei die gegebenenfalls vorhandene Trennung der Strömungen über in Reihe angeordnete Module erhalten bleibt.

### Kurze Beschreibung der Figuren

Figur 1a zeigt ein erfindungsgemäßes Modul zur Filtration von Fluiden mit in einem Rohr ausgebildeten und durch ein Trennelement getrennten Zuführkanälen;
Figur 1b zeigt eine vertikale Schnittansicht der Figur 1a mit senkrecht zum Trennelement ausgeführtem Schnitt, bei dem beide Zuführkanäle im Modulinneren sichtbar sind;
Figur 1c zeigt eine vertikale Schnittansicht der Figur 1a mit parallel zum Trennelement ausgeführtem Schnitt, bei dem beide Zuführkanäle im Modulinneren sichtbar sind;
Figur 2a zeigt ein erfindungsgemäßes Modul zur Filtration von Fluiden mit in zwei Rohren ausgebildeten Zuführkanälen.
Figur 2b zeigt eine vertikale Schnittansicht der Figur 2a mit senkrecht zur sich im Modul zwischen den Zuführkanälen befindenden Trennwand ausgeführtem Schnitt, bei dem beide Zuführkanäle im Modulinneren sichtbar sind;
Figur 2c zeigt eine vertikale Schnittansicht der Figur 2a mit parallel zur sich im Modul zwischen den Zuführkanälen befindenden Trennwand ausgeführtem Schnitt, bei dem beide Zuführkanäle im Modulinneren sichtbar sind;
Figur 2d zeigt eine isometrische Ansicht zweier erfindungsgemäßer, parallel verbundener Module zur Filtration von Fluiden;
Figur 3a zeigt eine abstrakte Darstellung des Filtervorgangs unter Verwendung eines erfindungsgemäßen Moduls zur Filtration von Fluiden.
Figur 3b zeigt eine abstrakte Darstellung einer Variante des erfindungsgemäßen Verfahrens zum Reinigen von Filtereinrichtungen eines Moduls zur Filtration von Fluiden, bei dem über zumindest einen Zuführkanal Fluid zugeführt, anschließend durch ein Filterelement gefiltert, anschließend zum Reinigen eines anderen Filterelements und letztlich über zumindest einen an das andere Filterelement angrenzenden Zuführkanal abgeführt wird;
Figur 3c zeigt eine abstrakte Darstellung einer Variante des erfindungsgemäßen Verfahrens zum Reinigen von Filtereinrichtungen eines Moduls zur Filtration von Fluiden, bei der das in Figur 3b gezeigte Verfahren in umgekehrter Richtung durchgeführt wird;

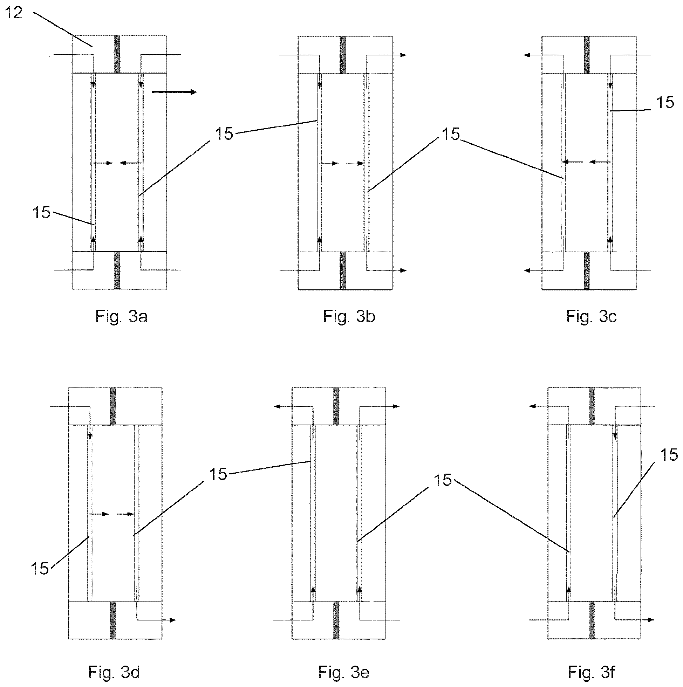

Figur 3d zeigt eine abstrakte Darstellung einer Variante des erfindungsgemäßen Verfahrens zum Reinigen von Filtereinrichtungen eines Moduls zur Filtration von Fluiden, bei der über einen Zuführkanal Fluid zugeführt, anschließend durch ein Filterelement gefiltert, anschließend zum Reinigen eines anderen Filterelements und letztlich über zumindest einen an das andere Filterelement angrenzenden Zuführkanal abgeführt wird, wobei sich der Fluid abführende Zuführkanal in einem Modul befindet, das parallel mit dem anderen Modul verbunden ist, in dem sich der das Fluid zuführende Zuführkanal befindet;
Figur 3e zeigt eine abstrakte Darstellung einer Variante des erfindungsgemäßen Verfahrens zum Reinigen von Filtereinrichtungen eines Moduls zur Filtration von Fluiden, bei der die Filtereinrichtung durch Vorbeispülen des Fluids gereinigt wird, indem Fluid entlang der Filtermembran geführt wird, ohne dass es gefiltert wird; und
Figur 3f zeigt eine abstrakte Darstellung einer Variante des erfindungsgemäßen Verfahrens zum Reinigen von Filtereinrichtungen eines Moduls zur Filtration von Fluiden, bei der das in Figur 3e dargestellte Verfahren durchgeführt wird, mit dem Unterschied, dass in einem Modul gleichzeitig Fluid zugeführt und abgeführt wird.

### Beschreibung der bevorzugten Ausführungsformen

Im Folgenden wird zuerst ein Modul 10 zur Filtration von Fluiden beschrieben, wobei sich Richtungsangaben immer auf die entsprechenden Figuren beziehen. Eine Basisausführungsform eines Moduls 10 zur Filtration von Fluiden umfasst eine Zuführleitung 14 zum Fördern von Fluid. Die Zuführleitung 14 weist zumindest zwei Zuführkanäle 12 auf, die das Fluid zu einer Filtereinrichtung 15 fördern. Die Zuführkanäle können als separate Rohre oder auch innerhalb eines Rohres durch eine Trennwand ausgebildet sein. Die Zuführkanäle umfassen auch einen getrennten Bereich in einem Kopfelement 18. Die Filtereinrichtung 15 umfasst mehrere Filterelemente. Die Filterelemente sind vorzugsweise als eine Vielzahl von übereinander gelegten gewickelten Flachmembranen oder nebeneinander angeordneten Hohlfasermembranen ausgebildet, durch die das von der Zuführleitung geförderte Fluid gedrückt wird und die dann die zu filternden Bestandteile aus dem Wasser aufnehmen. Besonders bevorzugt sind Hohlfasermembranen. Die zumindest zwei voneinander getrennten Zuführkanäle 12 weisen jeweils einen eigenen Filtereingangsbereich auf, an dem das Fluid in die Filtereinrichtung 15 eintritt.

Das Modul 10 umfasst ferner einen Filtratraum 16 für die Aufnahme des Filtrats, d.h. das durch das Filterelement gefilterte Fluid, und eine Filtratleitung 17, die einen oder mehrere Filtratkanäle aufweisen kann und die das Filtrat aus dem Filtratraum 16 aufnimmt und abführt. Der Filtratkanal kann dabei außermittig oder mittig angeordnet sein, wobei mit der außermittigen Anordnung tendenziell eine größere Flexibilität der Kombination mehrerer Module 10 und mit der mittigen Anordnung tendenziell bessere Strömungsverhältnisse im einzelnen Modul 10 resultieren.

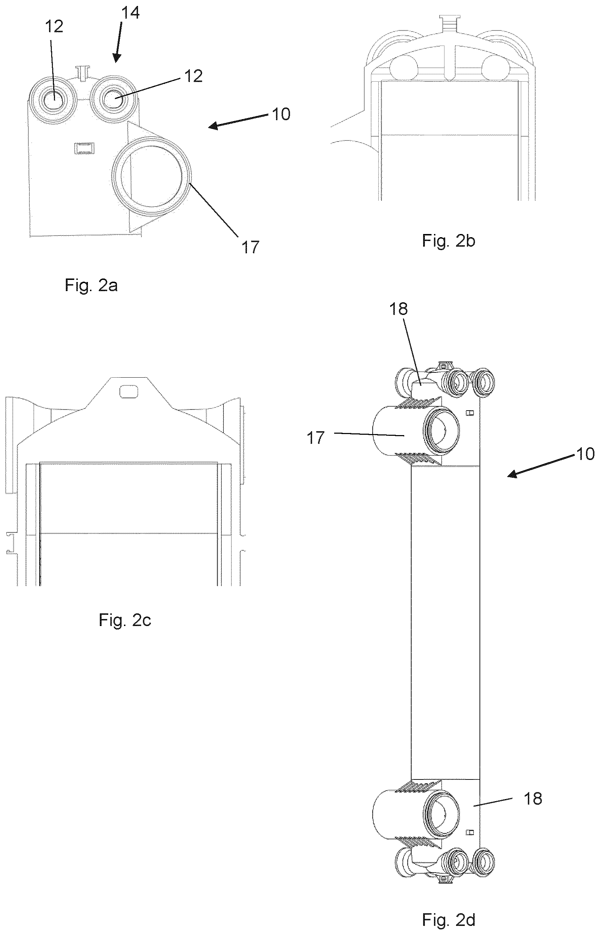

Der Filtratraum 16 ist in den hier dargestellten Ausführungsformen als Zylindrischer Behälter ausgebildet. Die Zuführleitungen können dabei sowohl an der Oberseite als auch an der Unterseite vorgesehen sein, wie es beispielhaft in Figur 2d dargestellt ist. Dadurch ergeben sich mehrere verschiedene Einstellungen für das Reinigungsverfahren, das nachfolgend beschrieben ist.

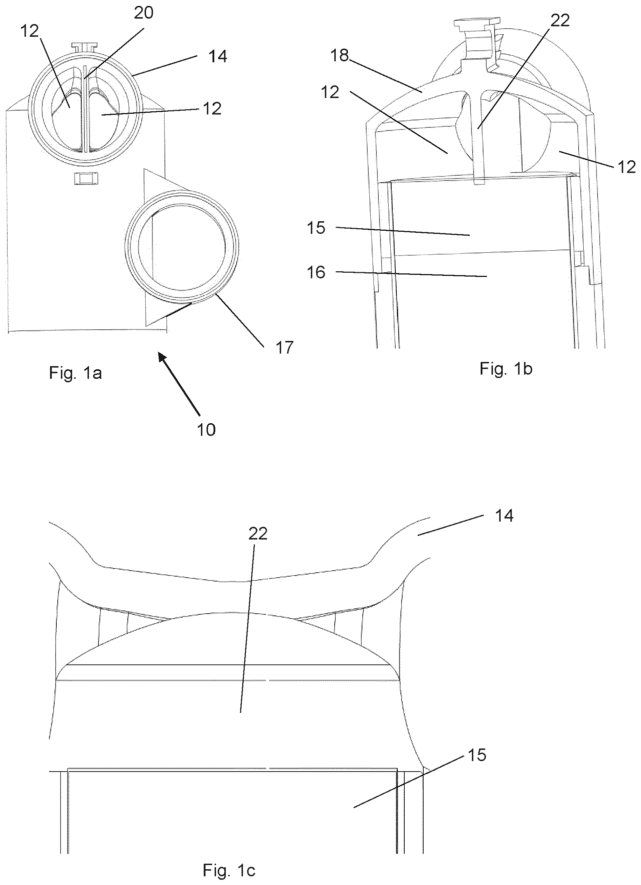

Das Filtrat gelangt durch Ausgangsöffnungen in der Wand des Filtratraums (nicht gezeigt) in die Filtratleitung 17. Diese Ausgangsöffnungen sind am Filtratraum 16 angeordnet, vorzugsweise nahe an dem Fluidkanal im Kopfelement. Die Filtratleitung 17 kann mit einem Verbindungsstück (nicht gezeigt) mit den Ausgangsöffnungen in Verbindung stehen. Solche Verbindungsstücke sind beispielsweise in der nachveröffentlichten europäischen Anmeldung mit der Anmeldenummer EP 10 2020 116 184 offenbart. Das Verbindungselement ist ein eigenständiges Element, das aber auch als Teil des Filtratraums 16, als Teil der Filtratleitung 17 oder Teil der Zuführleitung 14 und einstückig mit diesen ausgebildet sein kann. Das Verbindungselement weist beispielsweise zwei Verbindungsflansche oder Verbindungsstellen auf, an denen Rohre der Filtratleitung 17 befestigt werden können. Das Verbindungselement umschließt den Filtratraum 16 an den Auslassöffnungen derart, dass eine Wand vor der oder den Auslassöffnungen einen vergleichsweise engen Spalt ausbildet. Der Spalt ist bei den üblichen Maßen solcher Leitungsanordnungen an der breitesten Stelle vorzugsweise 10 cm bis 20 cm oder weniger, möglicherweise auch nur 7 cm oder weniger. Ferner verjüngt sich der Spalt vorzugsweise, insbesondere von der dem Filtereingangsbereich weiter entfernt gelegenen Position zum Filter hin (also bspw. in Figur 1a nach oben hin), d.h. in der Nähe des Filtereingangsbereichs ist der Spalt schmaler ausgebildet, so dass direkt am Filtereingangsbereich weniger Fluid aus dem Filtratraum 16 in das Verbindungselement strömen kann. Der Spalt ist überall an den Auslassöffnungen vorgesehen. An den Stellen aber, an denen kein Spalt vorhanden ist, sind keine Auslassöffnungen vorgesehen. Die Rohrwand des Filtratraums 16, die in den Durchmesser des Verbindungselements gerichtet ist, der mit der Filtratleitung 17 verbunden ist, weist keine Auslassöffnungen 42 auf. In den Figuren 1a bis 1c ist eine erste Ausführungsform eines Moduls 10 zur Filtration von Fluiden wie beispielsweise Wasser dargestellt. Diese bevorzugte Ausführungsform eines Moduls zur Filtration von Fluiden 10 umfasst eine Zuführleitung 14 zum Fördern von Fluid, eine einen Filter umfassende Filtereinrichtung 15 aufweist, die eingerichtet ist, um jeweils das von der Zuführleitung 14 an die Filtereinrichtung 15 geförderte Fluid zu filtern. Ferner wiest das Modul einen Filtratraum 16 für die Aufnahme des durch den Filter gefilterten Fluids auf und einen Filtratkanal 17, der das Filtrat aus dem Filtratraum 16 aufnimmt und abführt. Die Zuführleitung 14 weist zumindest zwei voneinander getrennte Zuführkanäle 12 und die Filtereinrichtung 15 für jeden Zuführkanal 12 einen nur für diesen bestimmten Filtereingangsbereich auf. Das Filterelement umfasst bevorzugt Hohlfasermembrane, die insbesondere zwei Filtereingangsbereiche verbinden, die für in Bezug auf den Filtratraum 16 gegenüberliegende Zuführleitungen 12 vorgesehen sind. Dadurch wird es insbesondere ermöglicht, bei Verwendung zweier parallel miteinander verbundener Module 1, die Filtereinrichtung durch Spülen des Fluids entlang dieser zu reinigen, ohne dabei das Fluid zu filtern. Diese bevorzugte Ausführungsform ist in den Figuren 3e und 3f schematisch dargestellt. Dadurch können beispielsweise höhere Fluidförderraten und höhere Fluidfördergeschwindigkeiten verwendet werden.

Bei dem in den Figuren 1a und 1b gezeigten Modul 10 zur Filtration von Fluiden sind zwei an das Modul angeschlossene Zuführkanäle 12 in einem einzigen Rohr zusammengefasst. Das in Figur 1a dargestellte Trennelement 20 erstreckt sich auch in den Kopfbereich 18, so dass die getrennte Zuführung von Fluid bis zur Filtereinrichtung 15 gesichert ist. Besonders bevorzugt wird der Bereich zwischen dem Trennelement 20 und den an Dieses angrenzenden Bereichen mittels eines Dichtelementes gegenüber dem Fluid abgedichtet. Damit werden Nebenströmungen vermieden und es können höhere Fluidförderraten und höhere Fluidfördergeschwindigkeiten verwendet werden. Eine solche Abdichtung kann beispielsweise eine als Dichtlippe, Flachdichtung oder Keil ausgeformte Elastomerdichtung sein. Das Dichtelemement kann dabei in das Modul eingeklebt oder eingeschweißt werden. Ebenso besteht die Möglichkeit, die Dichtung als zweite Komponente direkt im Gussverfahren einzubringen. In einer besonders bevorzugten Ausführungsform wird eine Elastomerdichtung direkt im Gussverfahren in eine entsprechende Aussparung des aus thermoplastischem Kunststoff, beispielsweise aus Polyurethan, bestehenden Moduls eingegossen. Damit einhergehende Vorteile sind ein hocheffizientes Herstellverfahren und eine hohe Dichtigkeit des Dichtelements.

Alternativ zur Zusammenfassung zweier an ein Modul 10 zur Filtration von Fluiden angeschlossener Zuführkanäle 12 in einem einzigen Rohr können diese über separate Rohre angeschlossen werden, was in der Figur 2a gezeigt wird. Im Unterschied zum Anschluss in einem Rohr zusammengefasster Zuführkanäle 12 ist die Herstellung der Rohre konstruktiv weniger aufwändig, da ohne unter großem Aufwand ein verlängertes Trennelement 20 einsetzen zu müssen. Ansonsten unterscheidet sich die Ausführungsform in den Figuren 2a- 2d nicht von der Ausführungsform in den Figuren 1a - 1c.

Im Kopfbereich 18 des Moduls 10 zur Filtration von Fluiden sind die Zuführkanäle 12 als voneinander getrennte Kammern ausgebildet, die an die Filtereinrichtung 15 angrenzen. Solche Kammern sind beispielsweise in Figur 1b und 2b gezeigt. Dadurch wird insbesondere eine gleichmäßigere Einleitung des Fluids in das Filterelement ermöglicht.

In den Zuführleitungen 12 des Moduls 10 können Vertiefungen 22 für das Abführen von Gas eingebracht sein, insbesondere im nach oben gerichteten Bereich der Kammern des Kopfelementes, um das Aufsteigen des Gases als Fluid mit geringer Dichte zu begünstigen. Das abzuführende Gas kann beispielsweise Luft sein, die beispielsweise in den Leitungen vor der Erstbefüllung mit Fluid vorhanden ist, oder auch zum Reinigen verwendeter Stickstoff. Ein Vorteil dieser Abführvertiefungen 22 ist, dass das Gas schnell und effektiv aus den Leitungen entfernt werden kann. und so das Strömungsverhalten des Fluids begünstigt wird, insbesondere bei reinigungsbedingtem Wechsel der Strömungsrichtung.

Ferner kann eine zumindest ein Ventil umfassende Ventileinrichtung vorgesehen, mit der ein oder mehrere Zuführkanäle 12 und/oder ein oder mehrere Filtratkanäle 17 verschließbar sind. Dadurch wird es zum einen ermöglicht, spezielle Rückspülverfahren, beispielsweise das in Figur 3d gezeigte Überkreuzrückspülverfahren umzusetzen. Zum anderen wird es ermöglicht, in Reihe miteinander verbundene Module 10 während des Filterprozesses zu reinigen, indem von einem Modul 10 abgeführtes verunreinigtes Fluid nicht zum nächsten Modul 10 gefördert wird, sondern der Strömungsweg durch entsprechende Ventilstellungen derart verändert wird, dass das verunreinigte Fluid dem Prozess gegebenenfalls temporär entnommen werden kann. Weiterhin wird es mit Verwendung einer Ventileinrichtung ermöglicht, kurzfristig auf einen im Prozess variierenden Bedarf an Filtrat zu reagieren, indem bei steigendem Bedarf ein zusätzlicher Zuführkanal 12 zugeschaltet wird und bei sinkendem Bedarf ein Zuführkanal 12 abgeschaltet wird. Bei einer besonders bevorzugten Ausführungsform ist das Ventil im Kopfbereich vorgesehen, wodurch Strömungswege zusätzlich verkürzt werden können. Grundsätzlich sind Sperrventile nicht notwendig. Es ist ausreichend bei einem oder mehreren Zuführkanälen 12 kein Fluid einzupumpen und zur Filtereinrichtung 15 zu fördern. Dann wird durch den Pumpdruck der fördernden Zuführkanäle 12 das Fluid und/oder das Filtrat durch den Filter in den oder die nicht fördernden Zuführkanal oder Zuführkanäle 12 gedrückt und reinigt diesen. Mit einer Ventilsteuerung können die Zuführkanäle einzeln gesperrt werden und die zu reinigen Filter besser und schneller gereinigt werden.

Die Kopfbereiche 18 können nicht nur Eingangsöffnungen für die Zuführleitungen aufweisen, sondern auch Ausgangsöffnungen, so dass mehrere Module in Reihe geschaltet werden können. Die Zuführleitungen 12 fördern das Fluid also zu einer Vielzahl von Filtereinrichtungen 15 und Filtraträumen 16, die hintereinander angeordnet sind.

in den Figuren 3a-3f ist das Modul schematisch dargestellt, wobei zwei Filtereinrichtungen und entsprechende Zuführleitungen gegenüber und damit parallel angeordnet sind. Das bedeutet, dass hier vier Zuführleitungen vorgesehen sind. Beispielhaft werden hier Hohlfasermembrane als Filtereinrichtungen 15 verwendet. In Figur 3a ist der normale Funktionsbetrieb des Moduls 10 dargestellt. Die Zuführleitungen 12 führen das Fluid zu den Filtereinrichtungen 15, wo sie durch die Membrane hindurchgedrückt werden und die Partikel des Fluids in dem Filter hängen bleiben. Das so entstandene Filtrat befindet sich im Filtratraum und wird dann von der Filtratleitung 17 abtransportiert.

Mit den beschriebenen Modulen lassen sich dann die verschiedenen Reinigungsverfahren durchführen. Ein erfindungsgemäßes Verfahren zum Reinigen von Filtereinrichtungen 15 eines Moduls 10 zur Filtration von Fluiden umfasst das Zuführen und/oder Abführen von Fluid zur Filtereinrichtung 15 über mehrere Zuführkanäle 12. Das bedeutet, dass zumindest eine Zuführleitung 12 das Fluid zur Filtereinrichtung 15 fördert und eine Zuführleitung 12 das dorthin geförderte Fluid abführt. Beim Bewegen des Fluids im Bereich der Filtereinrichtung 15 wird dieses entweder durch einen porösen Bereich der Filtereinrichtung 15, beispielsweis die Membran, hindurchbewegt und damit gefiltert oder am porösen Bereich entlang geführt und damit nicht gefiltert.

Bei der in den Figuren 3b und 3c gezeigten Ausführungsformen des Verfahrens wird das Fluid gefiltert. Hier tritt das Fluid über einen ersten Zuführkanal 12 aus einem Filterelement der Filtereinrichtung 15 in Richtung des Filtratraums 16 aus. Anschließend tritt Filtrat aus dem Filtratraum 16 in umgekehrter Richtung über ein anderes Filterelement der Filtereinrichtung 15 in einen den entsprechenden Zuführkanal 12 ein und reinigt dabei das andere Filterelement. Diese Ausführungsformen funktionieren auch bei einer nicht parallelen Ausgestaltung des Moduls mit lediglich zwei Zuführkanälen.

In Figur 3d ist ein Diagonalverfahren dargestellt. Hier sind vier Zuführkanäle bereitgestellt aber nur zwei Diagonal gegenüberliegende werden benutzt, die anderen verschlossen, wofür insbesondere Ventile verwendet werden. Dadurch wird es ermöglicht, gezielt bestimmte Filter effizienter zu reinigen. Selbstverständlich kann die Strömungsrichtung umgekehrt werden oder es können die in Figur 3d offenen Zuführkanäle 12 geschlossen und die offenen geschlossen werden um das Diagonalverfahren umzukehren.

Eine Ausführungsform, bei der Fluid zum Reinigen einer Filtereinrichtung 15 verwendet, aber nicht gefiltert wird ist in den Figuren 3e und 3f dargestellt. Diese Ausführungsformen funktionieren im Gegensatz zu den anderen Reinigungsverfahren nur mit einer Hohlfasermembran, aber nicht mit einer Flachmembran. Dort tritt das Fluid dann nicht von der Filtereinrichtung 15 in Richtung des Filtratraums 16 aus, sondern fließt durch die Hohlfasermembranen zum gegenüberliegenden Filtereingangsbereich einer anderen Zuführleitung 12. Dabei wird die Filtereinrichtung 15 durch das in den Hohlfasermembranen entlang geführtes Fluid gereinigt, indem die in der Hohlfasermembran befindlichen Partikel vom Fluid aufgenommen werden..

Bei einer bevorzugten Ausführungsform, bei der Fluid zum Reinigen einer Filtereinrichtung 15 verwendet wird, werden mehrere Module 10 durch dieselben Zuführkanäle 12 in Reihe miteinander verbunden. Damit wird es ermöglicht, dass das Fluid in eine im Kopfelement des Moduls 1 vorhandene Kammer einfließen und zumindest teilweise ausfließen kann. Besonders bevorzugt wird ein bei einem Modul 10 zur Zuführung von Fluid verwendeter Zuführkanal 12 bei einem anderen darauffolgenden Modul 10 ebenso zur Zuführung von Fluid verwendet, damit die im zur Abführung von Fluid verwendeten Zuführkanal 12 vorhandenen Verunreinigungen nicht eine im Prozess folgende Filtereinrichtung verunreinigen. Um diese Ausführungsform zu ermöglichen, sind Module 10 mit zwei Öffnungen für jeden Zuführkanal 12 notwendig, um einen Teil des zum Modul 10 zugeführten beziehungsweise vom Modul 10 abgeführten Fluids zum darauffolgenden Modul 10 zuzuführen beziehungsweise von diesem abzuführen.

Bei einer bevorzugten Ausführungsform, bei der Fluid zum Reinigen einer Filtereinrichtung 15 verwendet wird und die in Figur 3 dargestellt ist, werden mehrere Module 10 durch dieselbe Filtereinrichtung 15 parallel miteinander verbunden. Dadurch wird einerseits insbesondere das Führen von Fluid entlang einer Filtereinrichtung 15 ermöglicht, ohne dass das Fluid gefiltert wird. Andererseits werden dadurch insbesondere spezielle Rückspülverfahren, beispielsweise das Überkreuzspülverfahren im Bereich einer einzelnen Filtereinrichtung 15 ermöglicht.

### Bezugszeichenliste

- 10: Modul zur Filtration von Fluiden
- 12: Zuführkanal
- 14: Zuführleitung
- 15: Filtereinrichtung
- 16: Filtratraum
- 17: Filtratkanal
- 18: Kopfbereich
- 20: Trennelement
- 22: Vertiefung

## Patentansprüche

1. Verfahren zum Reinigen von Filtereinrichtungen (15) eines Moduls zur Filtration von Fluiden (10), wobei das Modul eine Zuführleitung mit zumindest zwei getrennten Zuführkanälen, die das Fluid zu der Filtereinrichtung (15) fördern, wobei die die Filtereinrichtung (15) für jeden Zuführkanal (12) einen nur für diesen bestimmten Filtereingangsbereich aufweist, einen Filtratraum (16) und eine Filtratleitung (17), die einen oder mehrere Filtratkanäle aufweist und die das Filtrat aus dem Filtratraum (16) aufnimmt und abführt, bei dem mehrere Zuführkanäle (12) des Moduls Fluid zur Filtereinrichtung (15) zuführen und von der Filtereinrichtung (15) abführen, so dass gleichzeitig zumindest ein erster Zuführkanal ein Fluid zur Filtereinrichtung fördert und zumindest ein zweiter Zuführkanal das Fluid von der Filtereinrichtung abführt.

2. Verfahren nach Anspruch 1, bei dem das Fluid ungefiltert von einem ersten Zuführkanal (12) über die Filtereinrichtung (15) zum zweiten Zuführkanal (12) gefördert wird.

3. Verfahren nach Anspruch 1, bei dem das Fluid vor dem Abführen durch den zumindest zweiten Zuführkanal (12) durch die Filtereinrichtung (15) gefiltert wird.

4. Verfahren nach einem der vorhergehenden Ansprüche, ferner umfassend den Schritt des Verschließens eines oder mehrerer Zuführkanäle (12), insbesondere mittels eines Ventils.

5. Verfahren nach einem der vorhergehenden Ansprüche, bei dem gleichzeitig die Filter mehrerer in Reihe miteinander verbundener Module (1) mit den ersten und zweiten Zuführkanälen (2) gereinigt werden.

6. Verfahren nach einem der vorhergehenden Ansprüche, bei dem zumindest zwei Module (1) parallel miteinander verbunden sind.

7. Modul zur Filtration von Fluiden (10), umfassend:
i. eine Zuführleitung (14) mit zumindest zwei Zuführkanälen (12) zum Fördern von Fluid zu einer Filtereinrichtung (15);
ii. die ein Filterelement umfassende Filtereinrichtung (15), die eingerichtet ist, um jeweils das von der Zuführleitung (14) an die Filtereinrichtung (15) geförderte Fluid zu filtern;
iii. einen Filtratraum (16) für die Aufnahme des durch das Filterelement gefilterten Fluids; und
iv. einen Filtratkanal (17), der das Filtrat aus dem Filtratraum (16) aufnimmt und abführt;
**dadurch gekennzeichnet, dass**
die Zuführleitung (14) zumindest zwei voneinander getrennte Zuführkanäle (12) aufweist und die Filtereinrichtung (15) für jeden dieser Zuführkanäle (12) einen nur für diesen bestimmten Filtereingangsbereich aufweist, an dem das Fluid in die Filtereinrichtung (15) eintritt.

8. Modul nach Anspruch 7, bei dem das Filterelement eine Hohlfasermembran umfasst.

9. Modul nach Anspruch 7 oder 8, bei dem die Zuführkanäle (12) zumindest teilweise aus zwei getrennten Rohren ausgebildet sind und/oder in einem Rohr die Trennung der Zuführkanäle (12) durch ein Trennelement (20) ausgebildet ist.

10. Modul nach einem der Ansprüche 7-9, ferner umfassend ein Kopfelement, in dem die Zuführkanäle (12) durch voneinander getrennte Kammern ausgebildet sind, die an die Filtereinrichtung (15) angrenzen.

11. Modul nach Anspruch 10, bei dem die Kammern jeweils zwei Anschlussöffnungen aufweisen, sodass das Fluid in die Kammer einfließen und zumindest teilweise ausfließen kann.

12. Modul nach einem der Ansprüche 7-11, wobei die Verbindungen zwischen dem zumindest einen Trennelement (20) und den an dieses angrenzenden Bereichen vorzugsweise mittels eines Dichtelementes gegenüber dem Fluid abgedichtet ist.

13. Modul nach einem der Ansprüche 7-12, bei dem zumindest ein Zuführkanal (12) eine Vertiefung (22) für das Abführen von Gas aufweist.

14. Modul nach einem der Ansprüche 7-13, ferner umfassend eine ein Ventil umfassende Ventileinrichtung, mit der ein Zuführkanal (12) und ein Filtratkanal (17) verschließbar sind.

15. Modul nach Anspruch 14, bei dem das Ventil im Kopfbereich vorgesehen ist.

## Claims

1. Method for cleaning filter devices (15) of a module for filtering fluids (10), wherein the module comprises a supply line with at least two separate supply channels that convey the fluid to the filter device (15) wherein the filter device (15) has a filter input area for each supply channel (12) that is specific to that channel, a filtrate chamber (16) and a filtrate line (17) that has one or more filtrate channels and that receives and discharges the filtrate from the filtrate chamber (16) in which multiple supply channels (12) of the module supply fluid to the filter device (15) and/or discharge it from the filter device (15) so that at least a first supply channel simultaneously conveys a fluid to the filter device and at least a second supply channel conveys the fluid away from the filter device.

2. Method according to claim 1, in which the fluid is conveyed unfiltered from a first supply channel (12) via the filter device (15) to the second supply channel (12).

3. Method according to claim 1, in which the fluid is filtered through the filter device (15) before being discharged through the at least second supply channel (12).

4. Method according to one of the preceding claims, further comprising the step of closing one or more supply channels (12), in particular by means of a valve.

5. Method according to one of the preceding claims, in which the filters of several modules (1) connected to each other in series with the first and second supply channels (2) are cleaned at the same time.

6. Method according to one of the preceding claims, in which at least two modules (1) are connected to each other in parallel.

7. Module for filtering fluids (10), comprising:
i. a supply pipe (14) with at least two supply channels (12) for conveying fluid to a filter device (15);
ii. the filter device (15) comprising a filter element, which is equipped to filter in each case the fluid conveyed by the supply pipe (14) to the filter device (15);
iii. a filtrate space (16) for collecting the fluid filtered through the filter element; and
iv. a filtrate channel (17), which collects and discharges the filtrate from the filtrate space (16);
**characterized in that**
the supply pipe (14) has at least two supply channels (12) separated from each other, and for each of these supply channels (12) the filter device (15) has a filter inlet region allotted to this one alone at which the fluid enters the filter device (15).

8. Module according to claim 7, in which the filter element comprises a hollow fibre membrane.

9. Module according to claim 7 or 8, in which the supply channels (12) are at least partially formed of two separated tubes and/or the separation of the supply channels (12) is formed by a separator (20) in one tube.

10. Module according to one of claims 7-9, furthermore comprising a head element, in which the supply channels (12) are formed by chambers separated from each other, which adjoin the filter device (15).

11. Module according to claim 10, in which the chambers each have two connection openings, so that the fluid can flow into the chamber and at least partially flow out.

12. Module according to one of claims 7-11, wherein the connections between the at least one separator (20) and the regions adjoining it is preferably sealed against the fluid by means of a sealing element.

13. Module according to one of claims 7-12, in which at least one supply channel (12) has an indentation (22) for discharging gas.

14. Module according to one of claims 7-13, furthermore comprising a valve device comprising a valve, with which a supply channel (12) and a filtrate channel (17) can be closed.

15. Module according to claim 14, in which the valve is provided in the head region.

## Revendications

1. Méthode de nettoyage d'un dispositif de filtration (15) d'un module de filtration de fluides (10), le module comprenant une conduite d'alimentation avec au moins deux canaux d'alimentation séparés qui acheminent le fluide vers le dispositif de filtration (15), le dispositif de filtration (15) présentant pour chaque canal d'alimentation (12) une zone d'entrée de filtre uniquement destinée à celui-ci, un compartiment du filtrat (16) et une conduite du filtrat (17) qui présente un ou plusieurs canaux du filtrat et qui reçoit et évacue le filtrat du compartiment du filtrat (16), dans lequel plusieurs canaux d'alimentation (12) du module alimentent le fluide vers le dispositif de filtration (15) et l'évacuent du dispositif de filtration (15), de sorte qu'en même temps au moins un premier canal d'alimentation achemine un fluide vers le dispositif de filtration et au moins un deuxième canal d'alimentation évacue le fluide du dispositif de filtration.

2. Méthode selon la revendication 1, dans laquelle le fluide est acheminé sans être filtré depuis un premier canal d'alimentation (12) jusqu'au deuxième canal d'alimentation (12) via le dispositif de filtration (15).

3. Méthode selon la revendication 1, dans laquelle le fluide est filtré par le dispositif de filtration (15) avant d'être évacué par le au moins un deuxième canal d'alimentation (12).

4. Méthode selon l'une quelconque des revendications précédentes, comprenant en outre l'étape consistant à obturer un ou plusieurs canaux d'alimentation (12), notamment au moyen d'une vanne.

5. Méthode selon l'une quelconque des revendications précédentes, dans laquelle les filtres de plusieurs modules (1) connectés en série l'un à l'autre sont nettoyés simultanément avec les premier et deuxième canaux d'alimentation (2).

6. Méthode selon l'une quelconque des revendications précédentes, dans laquelle au moins deux modules (1) sont connectés en parallèle l'un à l'autre.

7. Module de filtration de fluides (10), comprenant :
i. une conduite d'alimentation (14) avec au moins deux canaux d'alimentation (12) pour acheminer le fluide vers un dispositif de filtration (15) ;
ii. le dispositif de filtration (15) comprenant un élément de filtration, qui est agencé pour filtrer respectivement le fluide acheminé depuis la conduite d'alimentation (14) vers le dispositif de filtration (15) ;
iii. un compartiment du filtrat (16) pour recevoir le fluide filtré par l'élément de filtration ; et
iv. un canal du filtrat (17) qui reçoit et évacue le filtrat du compartiment du filtrat (16) ;
**caractérisé en ce que**
la conduite d'alimentation (14) présente au moins deux canaux d'alimentation (12) séparés l'un de l'autre et le dispositif de filtration (15) présente pour chacun de ces canaux d'alimentation (12) une zone d'entrée de filtre destinée uniquement à celui-ci, au niveau de laquelle le fluide pénètre dans le dispositif de filtration (15).

8. Module selon la revendication 7, dans lequel l'élément de filtration comprend une membrane à fibres creuses.

9. Module selon la revendication 7 ou 8, dans lequel les canaux d'alimentation (12) sont formés au moins partiellement de deux tuyaux séparés et/ou dans un tuyau, la séparation des canaux d'alimentation (12) est formée par un élément de séparation (20).

10. Module selon l'une quelconque des revendications 7-9, comprenant en outre un élément de tête dans lequel les canaux d'alimentation (12) sont formés par des chambres séparées les unes des autres qui sont adjacentes au dispositif de filtration (15).

11. Module selon la revendication 10, dans lequel les chambres présentent chacune deux ouvertures de raccordement, de sorte que le fluide peut écouler dans la chambre et s'échapper au moins partiellement de celle-ci.

12. Module selon l'une quelconque des revendications 7-11, dans lequel les connexions entre ledit au moins un élément de séparation (20) et les zones adjacentes à celui-ci sont de préférence rendues étanches au fluide au moyen d'un élément d'étanchéité.

13. Module selon l'une quelconque des revendications 7-12, dans lequel au moins un canal d'alimentation (12) comporte un renfoncement (22) pour l'évacuation de gaz.

14. Module selon l'une quelconque des revendications 7-13, comprenant en outre un dispositif de vanne comprenant une vanne permettant d'obturer un canal d'alimentation (12) et un canal du filtrat (17).

15. Module selon la revendication 14, dans lequel la vanne est prévue dans la zone de tête.
